# EUROPÄISCHE PATENTSCHRIFT

(11) **EP 0 952 329 B1**
(45) Veröffentlichungstag und Bekanntmachung des Hinweises auf die Patenterteilung: **23.06.2004**
(21) Anmeldenummer: 99107546.6
(22) Anmeldetag: 15.04.1999
(51) Int. Cl.: F02F 7/00, F01M 1/02, F01P 5/10

(54) **Brennkraftmaschine mit einem integrierten Front-End**
Internal combustion engine with an integrated front-end
Moteur à combustion interne avec un front-end intégré

(30) Priorität: 25.04.1998 DE 19818700
(43) Veröffentlichungstag der Anmeldung: 27.10.1999
(73) Patentinhaber: DEUTZ Aktiengesellschaft, 51063 Köln (DE)
(72) Erfinder: Coester, Rolf, 51588 Nümbrecht (DE); Winter, Norbert, 68309 Mannheim (DE)

(56) Entgegenhaltungen:
- EP-A- 0 505 346
- DE-A- 4 211 896
- DE-A- 4 214 799
- DE-A- 4 433 247
- US-A- 2 322 961

## Beschreibung

Die Erfindung betrifft eine Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder bewegbar ist, wobei an der der Schwungradseite gegenüberliegenden Stirnseite eine Kühlflüssigkeitspumpe und eine Ölpumpe im unteren Bereich der Brennkraftmaschine und darüberliegend zumindest ein Abgasturbolader und ein Ladeluftkühler angeordnet sind.

Eine derartige Brennkraftmaschine ist aus der DE-44 33 247 A1 bekannt. Diese Brennkraftmaschine weist ein Kombinationsgehäuse auf, das im wesentlichen aus einem Aggregateträger für eine Ölpumpe und eine Kühlflüssigkeitspumpe genutzt wird. Oberhalb dieses Aggregateträgers schließt sich ein Kombinationsträger an, der im wesentlichen ein Teilgehäuse für Ladeluftkühler darstellt, wobei in diesen Kombinationsträger die Verbindungen zwischen den Auslässen der Ladeluftkühler und den Einlässen der Brennkraftmaschine integriert sind. Weiterhin ist in diesen Kombinationsträger ein Teil der Ölversorgungsleitungen eingelassen, wobei aber an diese zusätzliche Rohrleitungen anzuschließen sind. Für die Abgasturbolader sind wiederum separate Träger oberhalb des Kombinationsträgers vorgesehen, wobei entsprechende Versorgungsleitungen für die verschiedenen Medienanschlüsse des Abgasturboladers vorgesehen sein müssen.

Der Erfindung liegt die Aufgabe zugrunde, eine Brennkraftmaschine bereitzustellen, bei der insbesondere die Befestigung und Anbindung von Abgasturbolader und Ladeluftkühler verbessert ist.

Diese Aufgabe wird dadurch gelöst, daß an der Stirnseite der Brennkraftmaschine ein integriertes Front-End vorgesehen ist, in das der Ladeluftkühler einsetzbar ist und das gleichzeitig die Konsole für den Abgasturbolader darstellt und daß in das Front-End die in diesem Bereich erforderlichen Medienführungen integriert sind. Zunächst einmal wird dadurch, daß das Front-End das vollständige Gehäuse für den Ladeluftkühler und gleichzeitig die Konsole für den Abgasturbolader darstellt, eine Stabilisierung und Versteifung dieser Bauteile erreicht, die sich unter anderem positiv in Bezug auf die Haltbarkeit, die Reduzierung der Schwingungsbelastung der Turbolader und auch auf die Akustik auswirken. Weiterhin sind in dieses Front-End die Medienführungen, dies sind insbesondere Kühlflüssigkeitsführungen zur Versorgung des Kühlmantels des Abgasturboladers sowie des Kühlmantels des Ladeluftkühlers integrierbar, weiterhin die Schmierölversorgung und -entsorgung des Abgasturboladers, die Kurbelgehäuseentlüftung sowie die wesentliche Ladeluftführung in dieses Front-Ende integrierbar. Grundsätzlich ist an dieser Stelle anzumerken, daß diese Ausbildung des Front-Endes für Reihenbrennkraftmaschinen als auch für V-Brennkraftmaschinen geeignet ist. Bei einer Reihenbrennkraftmaschine sind dann vornehmlich ein Ladeluftkühler und ein Abgasturbolader in bzw. an dem Front-End befestigt, während bei einer V-Brennkraftmaschine jeweils zwei Ladeluftkühler und zwei Abgasturbolader, vorzugsweise in Verlängerung der beiden Zylinderreihen, an dem Front-End angeordnet sind.

In Weiterbildung der Erfindung weist das Front-End einen Schacht auf, in den der Ladeluftkühler als Einschubeinheit einsetzbar ist und wobei der Ladeluftkühler insgesamt unter Ladedruck steht. Dadurch kann der Ladeluftkühler ohne eigenes druckfestes Gehäuse ausgeführt sein, was Fertigungs- und Gewichtsvorteile mit sich bringt. Der Ladeluftkühler ist an einem den Schacht verschließenden Schachtdeckel befestigt. Dabei sind in weiterer Ausgestaltung in dem Schachtdeckel ein Kühlflüssigkeitseintritt und ein Kühlflüssigkeitsaustritt vorgesehen, an die externe Leitungen anschließbar sind. Von dem Kühlflüssigkeitseintritt gelangt die Kühlflüssigkeit über den Schachtdeckel in den Ladeluftkühler und von diesem wiederum über den Schachtdeckel in den Kühlflüssigkeitsaustritt. Dabei ist an geodätisch höchster Stelle des Systems eine Dauerentlüftung für die Kühlflüssigkeit vorgesehen, die über einen Entlüftungskanal in den darüberliegenden Kühlkreislauf des Abgasturboladers mündet. Dieses System ist montage- und wartungsfreundlich, da beispielsweise zum Ausbau eines Ladeluftkühler nur wenige Bauteile gelöst werden müssen.

In Weiterbildung der Brennkraftmaschine ist ein Schmierölzulauf in das Front-End vorgesehen, von dem aus eine Verteilung über zumindest einen Schmierölkanal auf eine Anschlußfläche an dem Kurbelgehäuse zu einer Nockenwelle erfolgt. Dabei wird das Schmieröl durch die hohle Nockenwelle weiter zu den Schmierstellen der Brennkraftmaschine geleitet.

Weiterhin zweigen von dem Schmierölkanal Stichkanäle für die Schmierölversorgung des Abgasturboladers ab. Dies stellt wiederum eine kompakte, integrale Bauform ohne zusätzliche, extern zu montierende Leitungen dar.

In gleicher Art ist weiterhin der Schmierölrücklauf von den Abgasturbolader in das Kurbelgehäuse der Brennkraftmaschine ebenfalls in das Front-End eingelassen, so daß auch hier keine externen Leitungen erforderlich sind.

In Weiterbildung der Erfindung weist der Schmierölrücklauf zwei in den Abgasturboladerfuß einmündende Anschlüsse auf, von denen einer mit einem Schmierölrücklauf des Abgasturboladers in Verbindung steht und der andere verschließbar ist. Diese Ausbildung ermöglicht insbesondere bei Ausbildung der Brennkraftmaschine als V-Motor die Verwendung von gleichen Abgasturboladergrundgehäusen.

In Weiterbildung der Erfindung ist ein Kühlflüssigkeitszulauf in das Front-End vorgesehen und der Kühlflüssigkeitszulauf weist eine Strömungsverbindung zu dem Kühlflüssigkeitseintritt in den Abgasturbolader und eine Weiterleitung in die Brennkraftmaschine auf. Auch diese Ausbildung trägt zur kompakten Bauform ohne zusätzliche Bauteile der Brennkraftmaschine bei.

Eine weitere Ausgestaltung der Erfindung sieht vor, die Kurbelgehäuseentlüftung in das Front-End zu integrieren. Dazu wird ein Kurbelgehäuseentlüftungskanal mit einem motorstirnseitigen Austritt bzw. Anschluß direkt unterhalb des oder der Abgasturbolader(s) zur optimalen Anbringung von Ölabscheidern mit relativ kurzen Leitungsverbindungen zum Ladelufteintritt des oder der Turbolader(s) sowie kurzer Ölrücklaufleitung zur Ölwanne in das Front-End eingegossen.

Weiterhin ist eine Ladeluftleitung vom Auslaß des Abgasturboladers zur Weiterleitung über den Ladeluftkühler zum Ladeluft-Receiver in das Front-End eingelassen. Auch diese Ausbildung stellt eine kompakte Bauform dar, die darüber hinaus äußerst stabil ist, da alle Bauteile an einem Grundelement befestigt sind.

Schließlich sind die Kühlflüssigkeitspumpe und die Ölpumpe an einem Aggregateträger im unteren Bereich des Front-Ends angeordnet.

Weitere Vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Fig. 1:: eine Stirnansicht der Brennkraftmaschine mit Aggregateträger, Front-End und montierten Abgasturboladern,
- Fig. 2:: einen Schnitt B-B nach Fig. 3 durch das Front-End,
- Fig. 3:: eine Draufsicht auf das Front-End von der Abgasturboladerseite,
- Fig. 4:: einen Schnitt E-E gemäß Fig. 2,
- Fig. 5:: einen Schnitt C-C gemäß Fig. 2,
- Fig. 6:: einen Schnitt A-A gemäß Fig. 2 und
- Fig. 7:: einen Schnitt D-D gemäß Fig. 2.

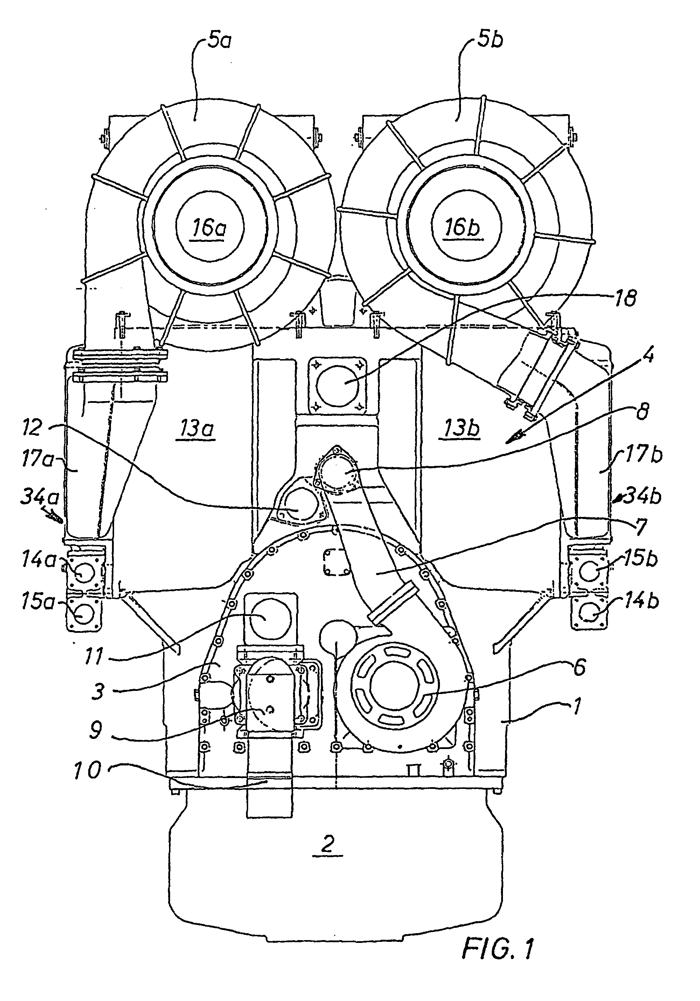

Fig. 1 zeigt die Stirnansicht einer in V-Bauart ausgeführten selbstzündenden Brennkraftmaschine mit einer Zylinderleistung in der Größe von 290 kW. An dieser Stirnseite sind an das Kurbelgehäuse 1 eine Ölwanne 2, ein Aggregateträger 3, ein integriertes Front-End 4 und zwei Abgasturbolader 5a, 5b als wesentliche sichtbare Bauteile montiert. An diese bzw. in diese einzelnen Bauteile sind noch weitere Teile bzw. Aggregate befestigt bzw. integriert. So ist an dem Aggregateträger 3 eine Kühlflüssigkeitspumpe 6 angeflanscht, der die Kühlflüssigkeit intern durch den Aggregateträger 3 zugeführt wird. Von der Kühlflüssigkeitspumpe 6 wird die Kühlflüssigkeit, die im übrigen normalerweise Wasser ist, über eine Verbindungsleitung 7 zu einem (Hochtemperatur)-Kühlflüssigkeitszulauf 8 zu dem Front-End 4 zugeführt. Neben der Kühlflüssigkeitspumpe 6 ist eine Ölpumpe 9 an dem Aggregateträger 3 befestigt, die über eine Saugleitung das Öl aus der Ölwanne 2 fördert. An der Ölpumpe 9 ist ein kombiniertes Regel- und Überdruckventil 10 angeordnet. Im oberen Bereich weist die Ölpumpe 9 einen Druckanschluß 11 auf, der mit einem über eine Bypass-Leitung umgehbaren Ölwärmetauscher und einer Ölfiltereinrichtung verbunden ist. Damit können diese Bauteile problemlos im Umfeld der Brennkraftmaschine montiert werden. Das gekühlte und gereinigte Öl gelangt über eine Verbindungsleitung in einen Schmierölzulauf 12, der wiederum in das Front-End 4 einmündet.

Das Front-End 4 weist zwei Schächte 13a, 13b auf, in die jeweils ein Ladeluftkühler von der jeweiligen Längsseite der Brennkraftmaschine komplett einsetzbar ist. Dabei weist der Ladeluftkühler kein eigenes Gehäuse auf und steht somit insgesamt unter Ladeluftdruck. Die Schächte 13a, 13b werden durch entsprechende Schachtdeckel 34a, 34b, an denen die Ladeluftkühler befestigt sind, verschlossen. Im unteren Bereich der Schachtdeckel 34a, 34b sind Anschlüsse für die die Ladeluftkühler durchströmende Kühlflüssigkeit vorgesehen. Da hier aus kühltechnischen Gründen nicht ein Anschluß beispielsweise an die Verbindungsleitung 7 von der Kühlflüssigkeitspumpe 6 erfolgen kann, sind hier diese externen Anschlüsse vorgesehen. Dies sind bei dem linken Schachtdeckel 34a der (Niedertemperatur)-Kühlflüssigkeitseintritt 14a und darunterliegend der entsprechende (Niedertemperatur)-Kühlflüssigkeitsaustritt 15a. Auf der gegenüberliegenden Schachtdeckel 34b sind diese Anschlüsse genau vertauscht. Die Abgasturbolader 5a, 5b, von dem jeweils nur der Verdichterteil zu sehen ist, fördern die jeweils mittig über Zuluftanschlüsse 16a, 16b zugeführte Verbrennungsluft über den Verdichter jeweils in den Ladelufteingang 17a, 17b der Schachtdeckel 34a, 34b und somit in den Ladeluftteil der jeweiligen Ladeluftkühler. Nachdem die Ladeluft durch die Ladeluftkühler gefördert ist, gelangt sie über eine die beiden Ladeluftströme zusammenführende Ladeluftführung und einen Anschlußkanal 19 in das Front-End 4 in die zentrale Ladeluftleitung der Brennkraftmaschine. Oberhalb des Kühlflüssigkeitszulaufes 8 ist ein Anschluß 18 zur Kurbelraumentlüftung vorgesehen.

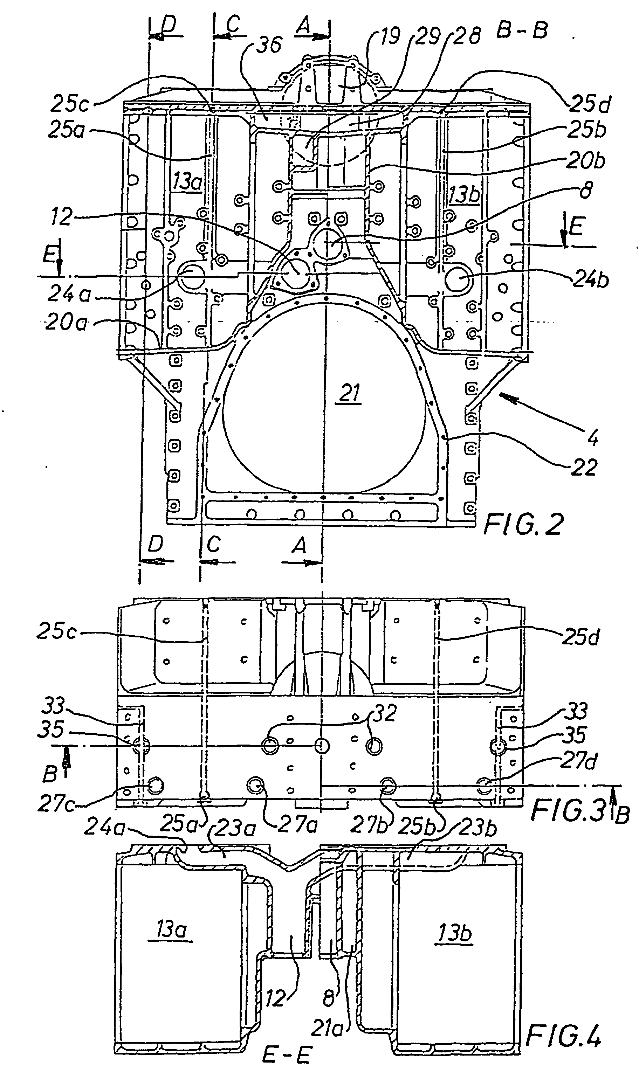

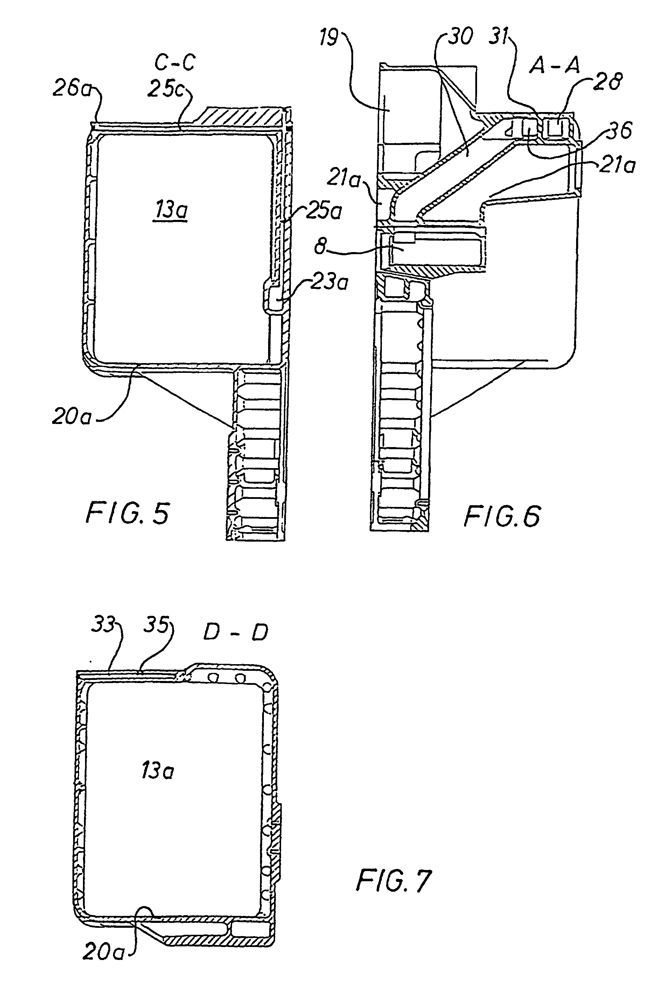

In dem Schnitt nach Fig. 2 ist - wie bei allen nachfolgenden Schnitten bzw. Ansichten - nur das Front-End 4 ohne weitere Bauteile dargestellt. Dabei sind die Schächte 13, 13b durch die geschnitten dargestellten Wände 20a, 20b abgetrennt. Diese so gebildeten Räume stehen insgesamt unter Ladedruck. Der darunterliegende zentrale Raum 21 weist eine umlaufende Befestigungsfläche 22 für den Aggregatträger 3 auf. Der Raum 21 ist mit dem Kurbelraum der Brennkraftmaschine und einem Kurbelgehäuseentlüftungskanal 21a verbunden und steht entsprechend unter Kurbelraumdruck. Darüberliegend ist der Schmierölzulauf 12 und der Kühlflüssigkeitszulauf 8 angeordnet. Der Schmierölzulauf 12 verzweigt in zwei Schmierölkanäle 23a, 23b (Fig. 4), die mit Schmierölanschlüssen 24, 24b direkt in die Hauptölverteilleitungen der Brennkraftmaschine führen. Diese Hauptölverteilleitungen sind im übrigen die hohlgearbeiteten Nockenwellen. Von den Schmierölkanäle 23a, 23b zweigen Stichkanäle 25a, 25b ab, die über weitere Stichkanäle 25c, 25d Schmierölanschlußöffnungen 26a, 26b für die Schmierölversorgung der Abgasturbolader 5a, 5b bilden. Diese Stichkanäle 25a, 25b, 25c, 25d sind gebohrt und die seitlichen Eintrittsöffnungen mit Stopfen verschlossen (Fig. 2, 3, 5). Der Schmierölrücklauf von den Abgasturboladern 5a, 5b erfolgt durch Schmierölrücklauföffnungen 27a, 27b, 27c, 27d, die wiederum mit einem Verbindungskanal 28 (Fig. 6), einmündend in einen Zentralkanal 29 (Fig. 2), verbunden sind. Diese Schmierölrücklauföffnungen 27a, 27b, 27c, 27d münden symmetrisch auf der Standfläche 31 für die Abgasturbolader 5a, 5b. Dabei sind die Schmierölrücklauföffnungen 27c, 27d verschlossen. In dem Bereich des Schmierölrücklaufs ist weiterhin die Kühlflüssigkeitsversorgung für den Abgasturbolader 5a, 5b in das integrierte Front-End 4 eingelassen. Dazu ist der Kühlflüssigkeitszulauf 8 (Fig. 6), der im übrigen das Front-End 4 durchdringt und mit der Kühlflüssigkeitsverteilleitung in dem Kurbelgehäuse der Brennkraftmaschine verbunden ist, mit einer Abzweigleitung 30 verbunden, die ebenfalls in den Bereich unterhalb der Standfläche 31 für die Abgasturbolader 5a, 5b führt. In diesem Bereich verläuft unterhalb der Standfläche 31 ein Querkanal 36, der zwei Austrittsöffnungen 32 in die Standfläche 31 aufweist. Weiterhin sind Übertrittsöffnungen 35 vorgesehen, die jeweils oberhalb eines Schachtes 13a, 13b mit dem Kühlflüssigkeitszulauf zu dem jeweiligen Abgasturbolader 5a, 5b verbunden sind. Diese Übertrittsöffnungen 35 sind ebenfalls mit dem Kühlflüssigkeitssystem der Abgasturbolader 5a, 5b verbunden und stellen eine dauernde Entlüftung der die Ladeluftkühler durchströmenden Kühlflüssigkeit dar. Hierzu sind die Übertrittsöffnungen 35 über je einen Entlüftungskanal 33 mit der Kühlflüssigkeitsführung in den Schachtdeckeln 34a, 34b verbunden.

## Patentansprüche

1. Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder bewegbar ist, wobei an der der Schwungradseite gegenüberliegenden Stirnseite eine Kühlflüssigkeitspumpe und eine Ölpumpe im unteren Bereich der Brennkraftmaschine und darüberliegend zumindest ein Abgasturbolader und ein Ladeluftkühler angeordnet sind,
**dadurch gekennzeichnet, daß** an der Stirnseite ein integriertes Front-End (4) vorgesehen ist, in das der Ladeluftkühler einsetzbar ist und das die Standfläche (31) für den Abgasturbolader (5a, 5b) darstellt und daß in das Front-End (4) die in diesem Bereich erforderlichen Medienführungen integriert sind.

2. Brennkraftmaschine nach Anspruch 1,
**dadurch gekennzeichnet, daß** das Front-End (4) einen Schacht (13a, 13b) aufweist, in den der Ladeluftkühler als Einschubeinheit einsetzbar ist und daß der Ladeluftkühler insgesamt unter Ladedruck steht.

3. Brennkraftmaschine nach Anspruch 1,
**dadurch gekennzeichnet, daß** in das Front-End (4) eine Dauerentlüftung für die den Ladeluftkühler durchströmende Kühlflüssigkeit integriert ist.

4. Brennkraftmaschine nach Anspruch 3,
**dadurch gekennzeichnet, daß** die Dauerentlüftung über den Kühlkreislauf des Abgasturboladers (5a, 5b) mit dem Kühlkreislauf der Brennkraftmaschine verbunden ist.

5. Brennkraftmaschine nach einem der vorherigen Ansprüche,
**dadurch gekennzeichnet, daß** ein Schmierölzulauf (12) in das Front-End (4) vorgesehen ist, von dem aus eine Verteilung über einen Schmierölkanal (23a, 23b) auf zumindest eine Anschlußfläche an dem Kurbelgehäuse zu zumindest einer Nockenwelle erfolgt.

6. Brennkraftmaschine nach Anspruch 5,
**dadurch gekennzeichnet, daß** von dem Schmierölkanal (23a, 23b) Stichkanäle (25a, 25b, 25c, 25d) für die Schmierölversorgung des Abgasturboladers (5a, 5b) abzweigen.

7. Brennkraftmaschine nach Anspruch 6,
**dadurch gekennzeichnet, daß** der Schmierölrücklauf von dem Abgasturbolader (5a, 5b) in das Kurbelgehäuse (1) der Brennkraftmaschine in das Front-End (4) eingelassen ist,

8. Brennkraftmaschine nach Anspruch 7,
**dadurch gekennzeichnet, daß** der Schmierölrücklauf zwei in den Abgasturboladerfuß einmündende Austrittsöffnungen (32) aufweist, von denen einer mit einem Schmierölrücklauf des Abgasturboladers (5a, 5b) in Verbindung steht und der andere verschließbar ist.

9. Brennkraftmaschine nach einem der vorherigen Ansprüche,
**dadurch gekennzeichnet, daß** ein Kühlflüssigkeitszulauf (8) in das Front-End (4) vorgesehen ist und daß der Kühlflüssigkeitszulauf (8) eine Strömungsverbindung zu dem Kühlflüssigkeitseintritt in den Abgasturbolader (5a, 5b) und eine Weiterleitung in die Brennkraftmaschine aufweist.

10. Brennkraftmaschine nach einem der vorherigen Ansprüche,
**dadurch gekennzeichnet, daß** eine Ladeluftleitung vom Auslaß des Abgasturboladers (5a, 5b) zur Weiterleitung über den Ladeluftkühler zum Ladeluft-Receiver in das Front-End (4) eingelassen ist.

11. Brennkraftmaschine nach einem der vorherigen Ansprüche,
**dadurch gekennzeichnet, daß** ein Kurbelgehäuseentlüftungskanal mit einem motorstirnseitigen Anschluß (18) in das Front-End (4) integriert ist.

12. Brennkraftmaschine nach einem der vorherigen Ansprüche,
**dadurch gekennzeichnet, daß** im unteren Bereich des Front-Ends (4) ein Adapterdeckel (3) vorgesehen ist, der die Kühlflüssigkeitspumpe (6) und die Ölpumpe (9) aufnimmt.

## Claims

1. Internal combustion engine having a crank casing in which a crank shaft is rotatably mounted, to which crank shaft at least one connecting rod which is fitted with a piston which can be moved in a cylinder covered by a cylinder head is coupled, a cooling fluid pump and an oil pump being arranged on the end side opposite the flywheel side, in the lower region of the internal combustion engine, and at least one exhaust gas turbocharger and a charge air cooler being arranged opposite them, **characterized in that** an integrated front end (4) into which the charge air cooler can be inserted and which constitutes the supporting face (31) for the exhaust gas turbocharger (5a, 5b) is provided on the end side, and **in that** the media guides which are necessary in this region are integrated into the front end (4) .

2. Internal combustion engine according to Claim 1, **characterized in that** the front end (4) has a shaft (13a, 13b) into which the charge air cooler can be inserted as a push-in unit, and **in that** the charge air cooler in its entirety is under charge pressure.

3. Internal combustion engine according to Claim 1, **characterized in that** a permanent venting means for the cooling fluid which flows through the charge air cooler is integrated into the front end (4).

4. Internal combustion engine according to Claim 3, **characterized in that** the permanent venting means is connected to the cooling circuit of the internal combustion engine via the cooling circuit of the exhaust gas turbocharger (5a, 5b).

5. Internal combustion engine according to one of the preceding claims, **characterized in that** a lubricating oil inflow (12) into the front end (4) is provided, from which inflow (12) distribution to at least one connecting face connecting to the crank casing is carried out to at least one cam shaft via a lubricating oil duct (23a, 23b).

6. Internal combustion engine according to Claim 5, **characterized in that** branch ducts (25a, 25b, 25c, 25d) for the supply of lubricating oil to the exhaust gas turbocharger (5a, 5b) branch off from the lubricating oil duct (23a, 23b).

7. Internal combustion engine according to Claim 6, **characterized in that** the lubricating oil return flow means from the exhaust gas turbocharger (5a, 5b) into the crank casing (1) of the internal combustion engine is led into the front end (4).

8. Internal combustion engine according to Claim 7, **characterized in that** the lubricating oil return flow means has two outlet openings (32) which open into the foot of the exhaust gas turbocharger, one of which openings (32) is connected to a lubricating oil return flow means of the exhaust gas turbocharger (5a, 5b), and the other of which openings (32) can be closed off.

9. Internal combustion engine according to one of the preceding claims, **characterized in that** a cooling fluid inflow (8) into the front end (4) is provided, and **in that** the cooling fluid inflow (8) has a flow connection to the cooling fluid inlet into the exhaust gas turbocharger (5a, 5b) and a line which leads on into the internal combustion engine.

10. Internal combustion engine according to one of the preceding claims, **characterized in that** a charge air line from the outlet of the exhaust gas turbocharger (5a, 5b) to the line which leads on to the charge air receiver via the charge air cooler is let into the front end (4).

11. Internal combustion engine according to one of the preceding claims, **characterized in that** a crank casing venting duct with an engine-end-side port (18) is integrated into the front end (4).

12. Internal combustion engine according to one of the preceding claims, **characterized in that** an adaptor cover (3) which accommodates the cooling fluid pump (6) and the oil pump (9) is provided in the lower region of the front end (4).

## Revendications

1. Moteur à combustion interne avec un carter moteur, dans lequel est monté à rotation un vilebrequin sur lequel est articulée au moins une bielle qui porte un piston qui peut se déplacer dans un cylindre recouvert par une culasse, une pompe de liquide de refroidissement et une pompe à huile étant disposées du côté frontal opposé au côté de la roue volante dans la région inférieure du moteur à combustion interne et au moins une turbosoufflante à gaz d'échappement et un refroidisseur de l'air de suralimentation étant disposés par-dessus,
**caractérisé en ce que** sur le côté frontal est prévu un front-end intégré (4) qui peut être inséré dans le refroidisseur de l'air de suralimentation et qui constitue la face de base (31) pour la turbosoufflante à gaz d'échappement (5a, 5b) et **en ce que** dans le front-end (4) sont intégrées les conduites de fluide nécessaires dans cette région.

2. Moteur à combustion interne selon la revendication 1,
**caractérisé en ce que** le front-end (4) présente un conduit (13a, 13b) dans lequel le refroidisseur de l'air de suralimentation peut être inséré sous forme de tiroir et **en ce que** le refroidisseur de l'air de suralimentation se trouve dans l'ensemble à la pression de la charge.

3. Moteur à combustion interne selon la revendication 1,
**caractérisé en ce que** dans le front-end (4) est intégré un désaérage permanent pour le liquide de refroidissement parcourant le refroidisseur de l'air de suralimentation.

4. Moteur à combustion interne selon la revendication 3,
**caractérisé en ce que** le désaérage permanent est connecté par le biais du circuit de refroidissement de la turbosoufflante à gaz d'échappement (5a, 5b) au circuit de refroidissement du moteur à combustion interne.

5. Moteur à combustion interne selon l'une quelconque des revendications précédentes,
**caractérisé en ce que** l'on prévoit dans le front-end (4) une alimentation en huile de lubrification (12) depuis laquelle s'effectue une distribution par le biais d'un canal d'huile de lubrification (23a, 23b) sur au moins une face de raccordement sur le carter moteur vers au moins un arbre à cames.

6. Moteur à combustion interne selon la revendication 5,
**caractérisé en ce que** depuis le canal d'huile de lubrification (23a, 23b) divergent des canaux de coulée (25a, 25b, 25c, 25d) pour l'alimentation en huile de lubrification de la turbosoufflante à gaz d'échappement (5a, 5b).

7. Moteur à combustion interne selon la revendication 6,
**caractérisé en ce que** le retour de l'huile de lubrification depuis la turbosoufflante à gaz d'échappement (5a, 5b) dans le carter moteur (1) du moteur à combustion interne est incorporé dans le front-end (4).

8. Moteur à combustion interne selon la revendication 7,
**caractérisé en ce que** le retour de l'huile de lubrification présente deux ouvertures de sortie (32) débouchant dans la base de la turbosoufflante à gaz d'échappement, dont l'une est connectée à un retour d'huile de lubrification de la turbosoufflante à gaz d'échappement (5a, 5b) et l'autre peut être obturée.

9. Moteur à combustion interne selon l'une quelconque des revendications précédentes,
**caractérisé en ce que** l'on prévoit une alimentation en liquide de refroidissement (8) dans le front-end (4) et **en ce que** l'alimentation en liquide de refroidissement (8) présente une connexion fluidique vers l'entrée du liquide de refroidissement dans la turbosoufflante à gaz d'échappement (5a, 5b) et une conduite supplémentaire conduisant dans le moteur à combustion interne.

10. Moteur à combustion interne selon l'une quelconque des revendications précédentes,
**caractérisé en ce qu'**une conduite d'air de suralimentation est incorporée dans le front-end (4) depuis la sortie de la turbosoufflante à gaz d'échappement (5a, 5b) en vue de la conduite supplémentaire par le biais du refroidisseur de l'air de suralimentation vers le récepteur de l'air de suralimentation.

11. Moteur à combustion interne selon l'une quelconque des revendications précédentes,
**caractérisé en ce qu'**un canal de désaérage du carter moteur avec un raccordement (18) du côté frontal du moteur est intégré dans le front-end (4).

12. Moteur à combustion interne selon l'une quelconque des revendications précédentes,
**caractérisé en ce que** l'on prévoit dans la région inférieure du front-end (4) un couvercle d'adaptateur (3) qui reçoit la pompe de liquide de refroidissement (6) et la pompe à huile (9).
